# EUROPEAN PATENT APPLICATION

(11) **EP 1 887 808 A1**
(43) Date of publication of application: **13.02.2008**
(21) Application number: 05814051.8
(22) Date of filing: 25.11.2005
(51) Int. Cl.: H04Q 7/00

(54) **IMPLEMENTING METHOD FOR MMS NAT TRAVERSING**

(30) Priority: 12.05.2005 CN 200510072435
(71) Applicant: ZTE Corporation, Shenzhen, Guangdong 518057 (CN)
(72) Inventor: ZHAO, Junfeng ZTE Plaza, Shenzhen, Guangdong 518057 (CN); CAO, Gang ZTE Plaza, Shenzhen, Guangdong 518057 (CN); CHEN, Xu ZTE Plaza, Shenzhen, Guangdong 518057 (CN)
(74) Representative: Ilgart, Jean-Christophe
(86) International application number: PCT/CN2005/002015
(87) International publication number: WO 2006/119683

(57) **Abstract**

An implementing method for MMS NAT traversing includes the following steps: configuring public network address IP1 on NAT apparatus, configuring private network address IP2 and IP3 on the network port of proxy apparatus, and static NAT converting public network address IP1 and private network address IP3 of proxy apparatus; terminals in the private network configure the address of the system control apparatus as IP2; the proxy apparatus communicates with terminals in the private network using IP2; the proxy apparatus communicates with terminals in the public network through NAT apparatus and system control apparatus using IP3, and the proxy apparatus is notified the public network address IP1 of data packets that have been NAT converted by data configuration; the IP address in MMS signaling layer and the IP address in an IP packet head are respectively converted by proxy apparatus and NAT apparatus. According to the present invention, because the IP address in MMS signaling layer and the IP address in the IP packet head are respectively converted by proxy apparatus and NAT apparatus, implementing of MMS NAT traversing can be more effectively, and the cost of network establishment can be less.

## Description

### Field of the Invention:

The present invention relates to NAT (Network Address Translation) traversing in communication field, and especially, to MMS (Multimedia Messaging Service) NAT traversing.

### Description of the Related Art

With the wide application of MMS (Multimedia Messaging Service) in the IP network, to realize the communication between a user inside a NAT apparatus and a user outside the NAT apparatus or the communication between a user inside a NAT apparatus and a user within the same NAT or other NATs, one or more proxy apparatus that supporting MMS NAT traversing is required to actualize the conversion of signaling and IP address in media packets in communication, so as to achieve the objective of mutual communication.

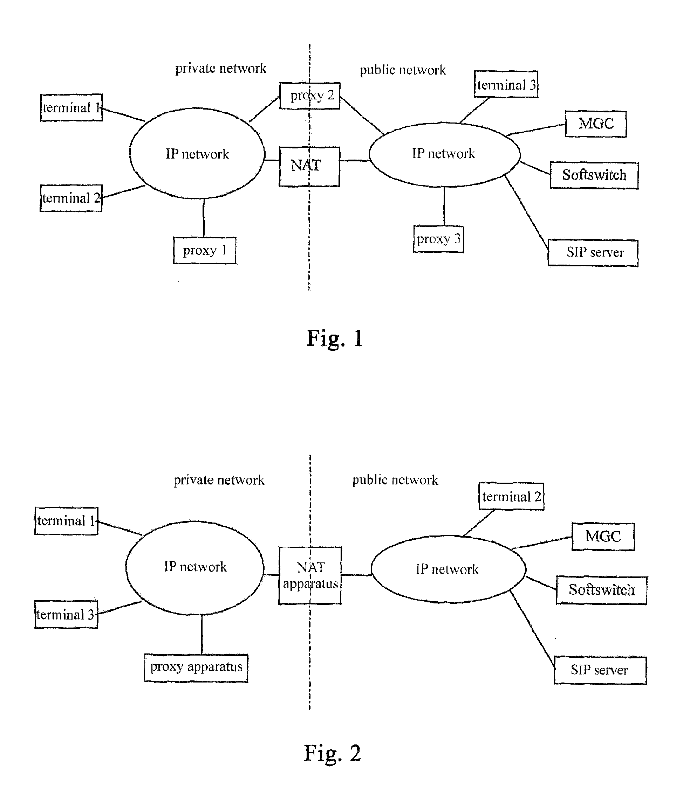

As shown in figure 1, generally, the proxy apparatus is located in three locations, i.e. within the private network (as "proxy 1" shows), the edges of the public and private networks (as "proxy 2" shows) and within the public network (as "proxy 3" shows).

When the proxy apparatus is located within the private network, the prior technology is as follows: configuring a private network IP address and a public network IP address for the proxy apparatus, the proxy apparatus fulfilling the proxy function of signaling packets and media packets of communications between terminals in the private network, external server (Gatekeeper GK, Soft-switch, SIP server etc.) and external terminals. When it stands proxy for signaling packets, the conversion of IP address and ports in IP packet head and the conversion of IP address and ports in communication signaling protocol are required to be completed, and when it stands proxy for media packets, the conversion of IP address and ports in IP packet head needs to be completed; the NAT apparatus transmitting transparently the signaling and media flow received from the proxy apparatus. The above prior technology can be referred to *Communication Industry Standard of People's Republic of China: Technology Requirements for Proxy Apparatus Supporting MMS NAT*/*FW Traversing (draft for examination).*

The above technology has the following problems and inconveniences in actual practice, which makes the practical application of network construction difficult:
it is required that the public network address of the NAT apparatus and the public network address of the proxy apparatus that the NAT apparatus transmits transparently should be at different network segments, while it is difficult for an enterprise in practice use to apply for the network segments and the fee is too high;
if the public network address of the NAT apparatus and the public network address of the proxy apparatus that it transmitted transparently are at the same network segment, then at least 3 IP addresses and network segments division will be needed, which would result in big IP address waste, and is complex in configuration and poor in operability;
the proxy apparatuses are identical with the stages of the private networks in number and are respectively located in each stage of the private networks, wherein the proxy apparatus of the superior private network stands proxy for the media and signaling packets of the proxy apparatus of the subordinate private network, and the proxy apparatus of the first stage private network configures the public network IP. This configuration method is not applicable to multi-stage private network and with a high cost.

### Summary of the Invention

The present invention aims to provide a method for implementing MMS NAT traversing to solve the problems such as high cost, IP address waste, complex configuration, poor operability, and not applicable to multi-stage private networks encountered in the prior technology, so as to actualize the MMS NAT traversing easily and effectively.

In order to realize the above object, the present invention discloses a method for implementing MMS NAT traversing. The method can be used for MMS communication network where a proxy apparatus is located within the private network, wherein the following steps are included:
Configuring public network address IP1 on a NAT apparatus and private network address IP2 and IP3 on network ports of a proxy apparatus, and conducting a static NAT conversion between the public network address IP1 and the private network address IP3 of the proxy apparatus;
   a private network terminal configuring IP2 as the address of a system control apparatus, and the proxy apparatus communicating with the private network terminal by using IP2;
the proxy apparatus communicating with a public network terminal through the NAT apparatus and the system control apparatus by using IP3, and notifying the proxy apparatus the public network address IP1 of its data packets that have been NAT converted in the manner of data configuration;
the proxy apparatus and the NAT apparatus conducting a convert of an IP address of MMS signaling layer and an IP address in an IP packet head respectively.
In the above MMS NAT traversing method, the private network address IP2 and IP3 are identical.
In the above MMS NAT traversing method, when the private network terminal calls the public network terminal, the following steps are included:
   Step one; the private network terminal sending a register or call signaling message to the private network address IP2 of the proxy apparatus;
   Step two, after receiving the signaling message, the proxy apparatus changing the address of the private network terminal contained in the signaling message into the public network address IP1, changing a source address in the IP packet head from the address of the private network terminal into the private network address IP3, changing a destination address in the IP packet head from the private network address IP2 into the address of the system control apparatus, and sending the modified signaling message to the NAT apparatus;
   Step three, after receiving data packets of the signaling message sent by the private network address IP3, the NAT apparatus changing the source address in the IP packet head from IP3 into IP1 according to the static NAT configuration, and sending the modified signaling message to the system control apparatus;
   Step four, after receiving the signaling message, the system control apparatus conducting a protocol flow process, and returning the signaling message to the NAT apparatus;
   Step five, after receiving data packets of the signaling message returned from the system control apparatus, the NAT apparatus changing the destination address in the IP packet head into the private network address IP3 according to the static NAT configuration, and sending the signaling message to the proxy apparatus;
   Step six, the proxy apparatus receiving data packets of the signaling message transmitted from the NAT apparatus, changing the destination address in the IP packet head into the address of the private network terminal, and changing the source address into the private network address IP2;
   Step seven, after the protocol interaction between the private network terminal, the proxy apparatus, the system control apparatus and the public network terminal is completed, obtaining a group of correlated IP and ports from the private network terminal to the public network terminal for media flow communication.

In the step six of the MMS NAT traversing method, if the address of the public network terminal in communication is contained in the signaling message, then changing the address of the external terminal into the private network address IP2, and sending the signaling message to the private network terminal.

In the above MMS NAT traversing method, the communication path of media flow is: "an private network terminal IP / port" - "the private network address IP2/ port of the proxy apparatus" - "the private network address IP3/ port of the proxy apparatus" - "the public network address IP1/port of the NAT apparatus" - "an public network terminal IP/port", or the reverse path.

In the above MMS NAT traversing method, wherein protocols of the media flow includes but not limited to H.323 protocol, SIP protocol, H.248 protocol and MGCP protocol.
According to the method for implementing MMS NAT traversing of the present invention, wherein an IP address of MMS signaling layer and an IP address in an IP packet head are converted respectively by a proxy apparatus and a NAT apparatus, thus the implementation of MMS NAT traversing can be more effective and the cost of network construction can be less.

### Brief Description of the Accompanying Drawings

Figure 1 is a schematic diagram of common locations of a proxy apparatus in the network.
Figure 2 is a schematic diagram of a network structure for implementing the present invention.
Figure 3 is a flow chart of the embodiment of the present invention.

### Detailed description of the invention

Embodiments of the invention will be hereinafter described in detail with reference to the drawings.

As shown in figure 2, the network structure for implementing the present invention mainly comprises: private network terminals (i.e. terminals within the private network, terminal 1 and terminal 3), a proxy apparatus, a NAT apparatus, a public network terminal (i.e. the terminal within the pubic network, terminal 2), system control apparatuses (MGC, Soft-switch, SIP server, etc.). The connection relationship of respective units can be seen in figure 2, wherein the same part with the prior technology will not be described. The special network configuration relationship owned by the present invention is as follows:

Reserving a public network address (IP1) and two private network addresses (IP2, IP3) for the proxy apparatus, wherein IP2 and IP3 can be two different addresses or the same one. The private network addresses (IP2, IP3) are configured on the network ports of the proxy apparatus; the private network terminal configuring IP2 as the address of the system control apparatus, the proxy apparatus communicating with the private network terminal by using IP2, and communicating with the external terminal (i.e. the public network terminal) through the NAT apparatus and the system control apparatus by using IP3. Configuring the public network address IP1 on the NAT apparatus, and setting the public network address IP1 and the private network address IP3 of the proxy apparatus, so as to conduct a static NAT convert. Notifying the proxy apparatus the public network address IP1 of its data packets that have been NAT converted in the manner of data configuration.

The embodiment of the present invention chiefly comprises the following steps:
Step one, the private network terminal sending a register or call signaling message to the private network address IP2 of the proxy apparatus;
Step two, after receiving the signaling message, the proxy apparatus changing an address of the private network terminal contained in the signaling message into the public network address IP1, changing a source address in the IP packet head from the address of the private network terminal into the private network address IP3, changing a destination address in the IP packet head from the private network address IP2 into an address of the system control apparatus, and sending data packets of the signaling message to the NAT apparatus for the reason that the system control apparatus is outside the NAT apparatus;
Step three, after receiving the data packets of the signaling message sent by IP3, the NAT apparatus changing the source address in the IP packet head from IP3 into IP1 according to the static NAT configuration, and sending the data packets to the system control apparatus ;
Step four, after receiving the signaling message, the system control apparatus conducting a protocol flow process, and returning the signaling message to the address IP1;
Step five, after receiving the data packets of the signaling message returned from the system control apparatus, the NAT apparatus changing the destination address in the IP packet head into IP3 according to the static NAT configuration, and sending the signaling message to the proxy apparatus;
Step six, the proxy apparatus receiving data packets of the signaling message transmitted from the NAT apparatus, changing the destination address in the IP packet head into the address of the private network terminal, and changing the source address into IP2. If the address of the external terminal (i.e. the public network terminal) communicates with the proxy apparatus is contained in the signaling message, then changing the address of the external terminal into IP2 and sending the data packets to the private network terminal;
Step seven, the private network terminal, the proxy apparatus, the system control apparatus and the public network terminal, after interacting based on protocols through the above method, obtaining a group of correlated IP and PORT from the private network terminal to the public network terminal for media flow communication, with its path as follows: (private network terminal IP/PORT) - (proxy apparatus IP2/PORT) - (proxy apparatus IP3/PORT) - (NAT apparatus IP1/PORT) - (public network terminal IP/PORT).

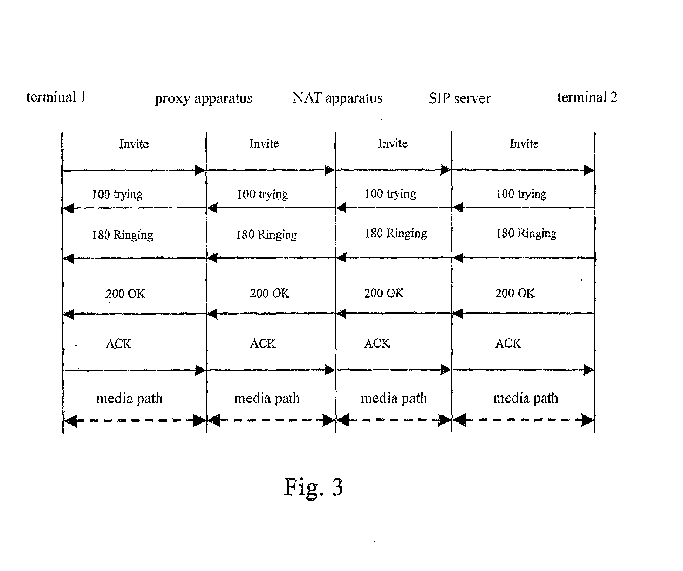

As shown in figure 3, supposing the network protocol is SIP protocol, take the process in which private network terminal 1 calls public terminal 2 as an example, the calling process includes the following steps:
(1) SIP terminal 1 initiating a call to SIP terminal 2: sending an Invite message to the proxy apparatus with the source address being the address of SIP terminal 1. After receiving the Invite message, the proxy apparatus allocating PORT2 and PORT3 on IP2 and IP3 for the call respectively, changing the private network address of terminal 1 in the SDP description of the message into IP1, changing PORT number into PORT3 allocated on IP3, changing the source address in the IP packet head into IP3, and transmitting the Invite message to the SIP server.
   After receiving the above message, the NAT apparatus changes the source address in the IP packet head from IP3 into IP1 and sending the Invite message to the SIP server; the SIP server receiving the Invite message and transmitting it to SIP terminal 2.
(2) SIP terminal 2 responding a 100 trying message. After receiving the 100 trying message, the SIP server transmitting it to IP1; the NAT apparatus, after receiving the message, changing the destination address IP1 in the IP packet head into IP3 and sending the message to the proxy apparatus, as to the proxy apparatus, when receiving the message, changing the source address in the IP packet head into IP2, changing the destination address into the address of terminal 1, and transmitting the message to SIP terminal 1.
(3) SIP terminal 2 ringing and sending a 180 Ring message to the SIP server. The conversion process of packets between each apparatus is the same as the process of the 100 trying message in step 2.
(4) SIP terminal 2 responding a 200 OK message, the SIP server receiving the message and transmitting it to IP1. The NAT apparatus, after receiving the message, changing the destination address IP1 in the IP packet head into IP3, and sending the message to the proxy apparatus. When receiving the message, the proxy apparatus changing the IP and PORT of terminal 2 in the SDP description into IP2 and PORT 2 allocated on IP2 for this call respectively; changing the source address in the IP packet into IP2, changing the destination address into the address of terminal 1 and transmitting the message to SIP terminal 1.
(5) SIP terminal 1, after receiving the 200 OK message, sending an Ack identification message to the proxy apparatus. The conversion process of packets between each apparatus is the same as the process of the Invite message in step 1.
(6) A media path traverses NAT for implementing communication between terminal 1 and terminal 2 is established between SIP terminal 1 and the proxy apparatus, the proxy apparatus and the NAT apparatus, the NAT apparatus and SIP terminal 2. Terminal 1 sending media packets to IP2/PORT2 of the proxy apparatus; the proxy apparatus changing the IP and PORT of source address terminal 1 in the IP packet head of the media packets into IP3 and PORT 3 allocated on IP3 for this call, changing the destination address IP2/PORT2 into the IP and PORT of terminal 2 and sending the media packets to terminal 2; after receiving the said packets, the NAT apparatus changing the source address in the IP packet head from IP3 into IP1, and sending the media packets to terminal 2.
(7) Terminal 2 sending the media packets to IP1 and PORT3. After receiving the packets, the NAT apparatus changing its destination address into IP3 and transmitting it to the proxy apparatus. After receiving the packets, the proxy apparatus changing the source address and port in the IP packet head into IP2/PORT2, changing the destination address and port into the IP and PORT of terminal 1, and sending the packets to terminal 1. Thus the NAT traversing and communication of SIP service between terminal 1 and terminal 2 has been actualized.
   The present invention is applicable to the situation wherein the system control apparatuses being in the private network, and the terminals and the proxy apparatus being in the public network as well. The present invention is applicable not only to NAT apparatus traversing but also to the apparatus being used as fire wall (FW) of NAT application etc. The present invention is also applicable to the situation where the proxy apparatus located in the multi stage NAT networks. The present invention is applicable to multi-media protocol like H.323, SIP, H.248, MGCP, etc. Besides, the present invention is applicable to IPV6 traversing as well.

It should be understood by those skilled in the art that various modifications, combinations, sub-combinations and alterations may occur depending on design requirements and other factors insofar as they are within the scope of the appended claims or the equivalents thereof.

### Industrial Applicability

The method for implementing MMS NAT traversing of the present invention converts the IP address of MMS signaling layer and the IP address in an IP packet head respectively through a proxy apparatus and a NAT apparatus, solves the problems such as high cost, IP address waste, complex configuration, poor operability, and not applicable to multi-stage private networks encountered in the prior technology, actualizes the MMS NAT traversing easily and effectively with a lower cost of network construction.

## Claims

1. A method for implementing MMS NAT traversing, used for multi-media communication network where a proxy apparatus is located within the private network, **characterized in**:
Configuring public network address IP1 on a NAT apparatus and private network address IP2 and IP3 on network ports of a proxy apparatus, and conducting a static NAT conversion between the public network address IP1 and the private network address IP3 of the proxy apparatus;
a private network terminal configuring IP2 as the address of a system control apparatus, and the proxy apparatus communicating with the private network terminal by using IP2;
the proxy apparatus communicating with a public network terminal through the NAT apparatus and the system control apparatus by using IP3, and notifying the proxy apparatus the public network address IP1 of its data packets that have been NAT converted in the manner of data configuration;
the proxy apparatus and the NAT apparatus conducting a convert of an IP address of MMS signaling layer and an IP address in an IP packet head respectively.

2. The method according to claim 1, **characterized in that**: the private network address IP2 and IP3 are identical.

3. The method according to claim 1, **characterized in that**: the private network address IP2 and IP3 are different.

4. The method according to claim 1, 2, or 3, **characterized in that**: when the private network terminal calls the public network terminal, the method comprises the following steps:
Step one, the private network terminal sending a register or call signaling message to the private network address IP2 of the proxy apparatus;
Step two, after receiving the signaling message, the proxy apparatus changing the address of the private network terminal contained in the signaling message into the public network address IP1, changing a source address in the IP packet head from the address of the private network terminal into the private network address IP3, changing a destination address in the IP packet head from the private network address IP2 into the address of the system control apparatus, and sending the modified signaling message to the NAT apparatus;
Step three, after receiving data packets of the signaling message sent by the private network address IP3, the NAT apparatus changing the source address in the IP packet head from IP3 into IP1 according to the static NAT configuration, and sending the modified signaling message to the system control apparatus;
Step four, after receiving the signaling message, the system control apparatus conducting a protocol flow process, and returning the signaling message to the NAT apparatus;
Step five, after receiving data packets of the signaling message returned from the system control apparatus, the NAT apparatus changing the destination address in the IP packet head into the private network address IP3 according to the static NAT configuration, and sending the signaling message to the proxy apparatus;
Step six, the proxy apparatus receiving data packets of the signaling message transmitted from the NAT apparatus, changing the destination address in the IP packet head into the address of the private network terminal, and changing the source address into the private network address IP2;
Step seven, after protocol interaction between the private network terminal, the proxy apparatus, the system control apparatus and the public network terminal is completed, obtaining a group of correlated IP and ports from the private network terminal to the public network terminal for media flow communication.

5. The method according to claim 4, **characterized in that**: in the said step six, if the address of the public network terminal in communication is contained in the signaling message, then changing the address of the external terminal into the private network address IP2, and sending the signaling message to the private network terminal.

6. The method according to claim 4, **characterized in that**: the communication path of the media flow is: an private network terminal IP/port - the private network address IP2/port of the proxy apparatus - the private network address IP3/ port of the proxy apparatus - the public network address IP1/port of the NAT apparatus - an public network terminal IP/ port, or the reverse path.

7. The method according to claim 4, **characterized in that**: protocols of the media flow includes but not limited to H.323 protocol, SIP protocol, H.248 protocol and MGCP protocol.
